# EUROPEAN PATENT SPECIFICATION

(11) **EP 1 638 819 B1**
(45) Date of publication and mention of the grant of the patent: **05.12.2007**
(21) Application number: 04721408.5
(22) Date of filing: 17.03.2004
(51) Int. Cl.: B60R 21/16, B60R 21/18, B60R 21/237

(54) **AN AIR-BAG AND A METHOD OF ASSEMBLING AN AIR-BAG**
AIRBAG UND VERFAHREN ZUR MONTAGE EINES AIRBAGS
AIRBAG ET PROCEDE POUR ASSEMBLER UN AIRBAG

(30) Priority: 10.04.2003 SE 0308348
(43) Date of publication of application: 29.03.2006
(73) Proprietor: AUTOLIV DEVELOPMENT AB, 447 83 Vargarda (SE)
(72) Inventor: JAMBUT, Jean-Francois, F-60000 Beauvais (FR); BRONNER, Jérome, F-76220 Gournay en Bray (FR); OUALLET, Pascal, F-60850 Saint Pierre des Champs (FR); PERRIER, Laurent, F-76440 Mauquenchy (FR)
(74) Representative: Parry, Simon James
(86) International application number: PCT/SE2004/000383
(87) International publication number: WO 2004/089701

(56) References cited:
- EP-A1- 0 963 880
- WO-A1-02/32726
- GB-A- 2 314 300
- US-B1- 6 439 600

## Description

**THE PRESENT INVENTION** relates to an air-bag arrangement and more particularly relates to an air-bag arrangement to be provided in a motor vehicle to provide protection for an occupant of the vehicle in the event that an accident should occur. More particularly the present invention relates to a so-called "bag-in-belt" air-bag arrangement in which the air-bag is initially mounted in part of a seat belt to be worn by an occupant of a vehicle. Air-bags of these type have been proposed before and present certain advantages, especially if the air-bag should be inflated when an occupant is leading forward from the normal seated position and is thus "out of position".

Generic WO 0232726 A1 discloses an air-bag having a first inflatable region and an second integral region having a gas flow duct.

The present invention seeks to provide an improved air-bag arrangement of the "bag-in-belt" type.

According to this invention there is provided an air-bag, the air-bag defining a first main inflatable region and defining an integral second region, the second region having a gas flow duct, the second region being tucked into the first region, with me gas flow duct emerging from the first region through an aperture or opening in the first region.

Preferably the first region is of frusto-conical form and the second region is of frusto-conical form, the first region and the second region meeting at a relatively thin neck.

Conveniently the end of the second region remote from the first region is open.

Advantageously the second region is formed of two super-imposed layers, the layers being interconnected by a seam to define a gas deflector.

An air-bag in accordance with the invention may be formed from two identical super-imposed layers of fabric and a third component of fabric, the components being interconnected by stitching.

Alternatively, an air-bag in accordance with the invention may be formed from two identical super-imposed layers of fabric interconnected by stitching.

Alternatively still, an air-bag in accordance with the invention may be a one-piece woven air-bag.

Conveniently the first region of the air-bag is formed from two layers provided with a releasable connection interconnecting parts of the layers.

In one embodiment the releasable interconnection is a tear seam.

In a further embodiment the releasable interconnection is an adhesive connection.

Preferably the adhesive connection is of an adhesive which yields when subjected to heat.

Advantageously the releasable connection serves to define two spaced apart inflatable ducts inflatable to form substantially rigid cells.

This invention also provides a method of assembling an air-bag, the air-bag having a first main inflatable region and an integral second region to form a gas deflector, the second region being provided with a protruding gas flow duct, the main inflatable region being provided with an aperture or opening, the method comprising tucking the second region into the main region and causing the gas flow duct to project outwardly through the aperture or opening.

Conveniently the method comprises a preliminary step of tucking the gas flow duct into the said second region.

Advantageously the main inflatable region when laid flat has opposed diverging sides, the method including a subsequent step of folding or tucking the air-bag to have a substantially rectangular form.

In embodiment parts of the air-bag are folded inwardly about substantially parallel fold-lines so that the air-bag has the substantially rectangular form.

In an alternative embodiment parts of the air-bag are tucked inwardly into the interior of the air-bag so that the air-bag has the substantially rectangular form.

Conveniently the air-bag, when having a rectangular form, is zig-zag folded.

Alternatively the air-bag, when having a rectangular form is rolled.

Advantageously the air-bag of this invention is provided with an additional aperture to act as a vent.

Preferably, the air bag is mounted to a safety belt.

In order that the invention may be more readily understood, and so that further features thereof may be appreciated, the invention will now be described, by way of example, with reference to the accompanying drawings in which:
FIGURE 1 is a perspective view of an occupant of a motor vehicle wearing a safety belt arrangement provided with a "bag-in-belt" air-bag, the air-bag being uninflated,
FIGURE 2 is a top view of the occupant of Figure 1 showing the air-bag in the inflated condition,
FIGURE 3 is a view illustrating components for an air-bag in accordance with the invention,
FIGURE 4 is a view of two of the components of Figure 3 when co-assembled and stitched,
FIGURE 5 is a view of the components of Figure 4 when subsequently manipulated and positioned,
FIGURE 6 is a view of the components of Figure 5 when provided with a third component as shown in Figure 3,
FIGURE 7 is a view of an alternate form of air-bag for use in embodiments of the invention,
FIGURE 8 is a view of an air-bag of one embodiment of the invention at an initial stage in the folding of the air-bag,
FIGURE 9 is a view showing the air-bag of Figure 8 during a subsequent step during the folding of the air-bag,
FIGURE 10 is a view of an air-bag of the type shown in Figure 8 illustrating an alternate initial folding step,
FIGURE 11 is a view showing the air-bag of Figure 9 or Figure 10 during a folding process,
FIGURE 12 is a view of the air-bag of Figure 11 during a subsequent phase in the folding process,
FIGURE 13 is a view of the air-bag of Figure 9 or Figure 10 during a rolling process, and
FIGURE 14 is a view of a modified air-bag for use in an embodiment of the invention.

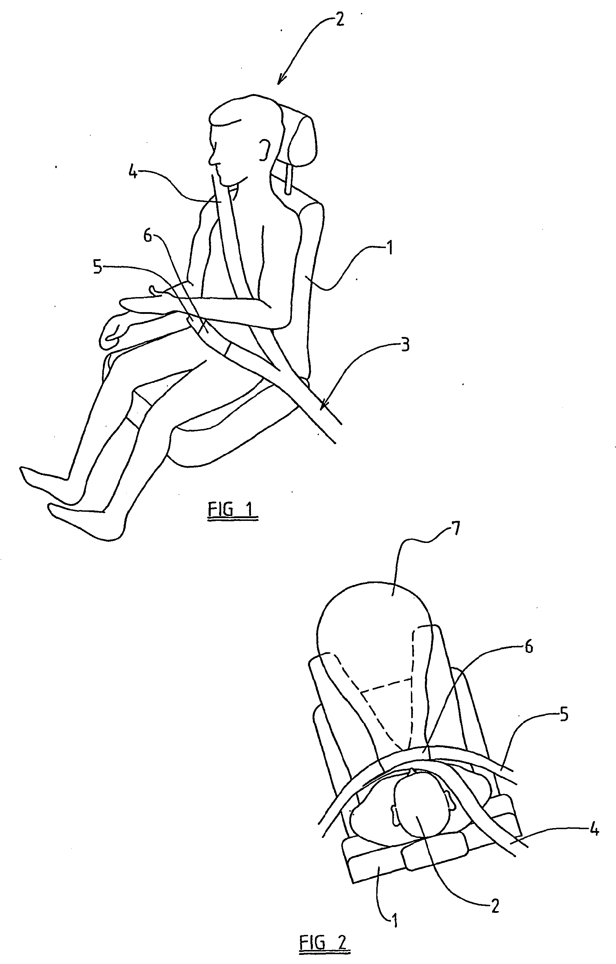

Referring initially to Figure 1 of the accompanying drawings, a vehicle seat 1 is illustrated which is occupied by a seat occupant 2. The seat occupant is wearing a three-point safety belt 3 which includes a portion 4 extending across the chest of the occupant 2 and a further portion 5 extending across the lap of the occupant 2. Mounted on the further seat belt portion 5 is a package 6, preferably made of soft plastic material or fabric, which contains an air-bag - a so-called "bag-in-belt" air-bag. The package 6 may simply contain the air-bag itself, there being a gas flow duct (not shown in Figure 1) extending from the package 6, along the further belt portion 5, to an appropriately mounted gas generator.

The air-bag is, as will be readily understood, intended to be inflated in the event that an accident should occur, with the inflated air-bag 7, as shown in Figure 2, extending forwardly from the package 6, thus being located directly in front of the seat occupant 2.

A bag-in-belt arrangement of this type may be used by a front seat occupant, in which case the package 6 may be mounted on the further seat belt portion 5 so that the package 6 is located centrally in front of the seat occupant 2 when the three-point safety belt 3 is in position as illustrated in Figure 1.

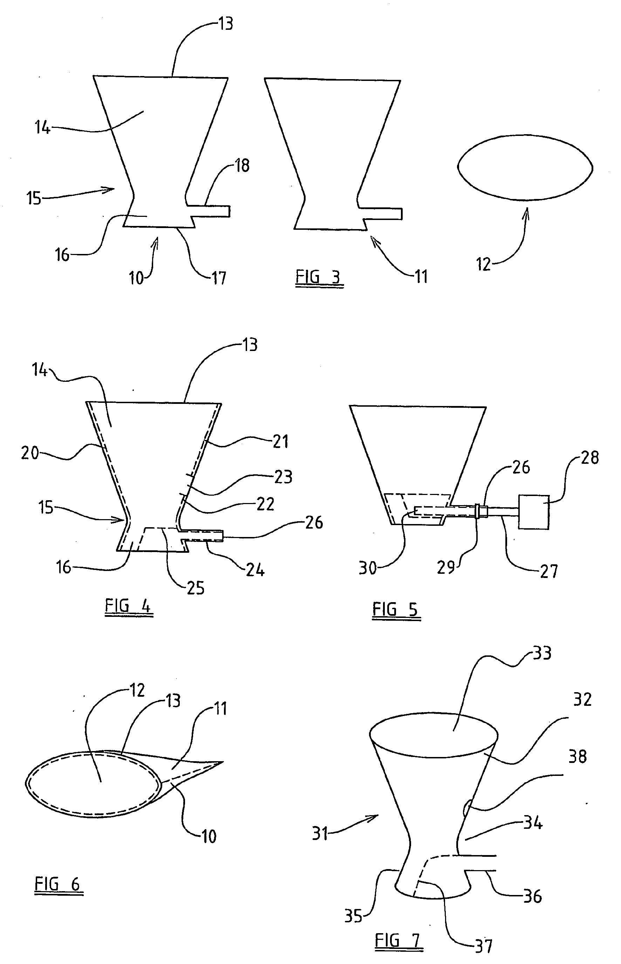

Figure 3 illustrates components to be assembled to form an air-bag for use in a bag-in-belt arrangement of the type disclosed above.

Figure 3 illustrates three fabric components 10, 11 and 12. The components 10 and 11 are identical and thus only the component 10 will be described.

The component 10 has linear upper edge 13, forming the upper edge of a panel 14 which tapers downwardly from the upper linear edge 13 to a relatively thin neck 15. Below the neck 15 there is a lower panel 16 which has diverging sides which extend to a lower linear edge 17 which is parallel with the upper edge 13.

Projecting laterally from one side wall of the lower panel 17 is a rectangular extension 18 which will, as it will become clear from the following description, partly form a gas flow duct.

As mentioned the component 11 is of exactly the same configuration as the component 10.

The component 12 illustrated in Figure 3 is of oval form, but it should be noted that in other arrangements, the component 12 could take a different shape, such as, for example, circular or rectangular.

To form an air-bag the two fabric components 10 and 11 are initially super-imposed. A first line of stitching 20 extends along the super-imposed side edges of the upper panels 14 and the lower panels 16 on the side remote from the extension 18. A second line of stitching 21 extends along the other side edges of the super-imposed upper panels 14, with the line stitching extending part way from the upper edge 13 towards the neck 15. At a point spaced from the lowermost end of the line of stitching 21 a further line of stitching 22 is provided which extends along the lower part of the super-imposed side edges of the panels 14 located above the projections 18, past the neck 15 and along the uppermost edge of the super-imposed extensions 18. Thus a gap 23 is left between the line of stitching 21 and the line of stitching 22.

A further line of stitching 24 is provided which extends along the lower super-imposed edges of the extensions 18 and along the lowermost part of the super-imposed edges of panels 16 to the lower edge 17.

Line 25 of Figure 4 illustrates the path of yet another line of stitching which is applied after further manipulation of the fabric.

The superimposed lower panels, which are now interconnected by lines of stitching 20, 24, are then folded or tucked inwardly through the neck 15 and pulled out through the top of the two interconnected lower panels 16, whereafter the line of stitching 25 is provided forming a seam which extends across the super-imposed lower panels 16, the line of stitching 25 having a first part which extends from and is in alignment with the stitching joining the uppermost edges of the super-imposed extension 18, and has a second part which extends parallel with the edges of the panels 16 remote from the extension 18, towards super-imposed lower edges 17. The interconnected lower panels 16 are then pulled back downwards so as to remain inverted above the neck 15 as illustrated in Figure 5.

Thus, the two components 10 and 11 are interconnected, and present an upper part, formed by the panels 14, of generally frusto-conical or funnel-shaped form, open at the upper edges 13, and having a lower part again of frusto-conical form, but provided with stitching 25 which serves to connect the two layers of fabric together, the lower part being turned inwardly.

It is to be appreciated that the interconnected extensions 18 effectively form a tubular duct 26 which, as will become clear, forms a gas flow duct.

The duct 26 is folded or tucked in through itself as the lower panels 16 are pulled up through the neck, so that the duct 26 lies between the super-imposed panels 16 within the region defined by the stitching 25, so as to thus lie between the stitching 25 and the super-imposed lower edges 17. After the part formed by the super-imposed panels 16, together with the duct 26 is pushed upwardly through the neck 15 so as to be inverted, the duct 26 is retrieved through the gap 23 between the line of stitching 21 and the line of stitching 22 so that the gas duct 26 again protrudes outwardly. The lower edges remain unstitched so that the lower edge of the part of the air-bag defined by the lower panels 16 remains open.

A gas flow pipe 27 is provided which is connected to a gas generator 28 (the gas generator 28 is shown schematically for the sake of simplicity of illustration). The gas flow pipe 27 is inserted through the gas flow duct 26 and the gas flow duct 26 may be secured to the gas flow pipe 27 by means of a clamp 29. The free end 30 of the gas flow pipe 27, which may be perforated to facilitate the flow of gas out of the pipe 27, is located between the lower panels 16 and 17 of the components 10 and 11 within the region defined by the line of stitching 25 and the lower edge 17, although the lower edge is now, because the panels 16 have been inverted, open upwardly within the region defined by the two superimposed panels 14.

Here it is to be understood that the panels 16 and the line of stitching 25 effectively form an internal gas deflector which will deflect gas from the gas flow pipe 27 to the interior of the air-bag. The gas, on leaving the gas flow pipe 27, may have a very aggressive flow, and may be very hot. The presence of the deflector formed by the panels 16 and the stitching 25 will minimise the risk of the integrity of the complete air-bag being compromised.

Figure 6 shows the oval component 12 being stitched in position at the upper part of the air-bag. Thus the edges 13 of the components 10 and 11 are stitched to the periphery of the oval component 12.

The resultant air-bag has a first main inflatable region formed between the upper panels 14. The second region, formed by the panels 16, is tucked into the lower part of the first region, with the gas flow duct 26 emerging from the first regions through an aperture or opening 23 defined by the gap between the lines of stitching.

Whilst Figures 3 to 6 have illustrated an embodiment of the invention in which the air-bag has been formed from separate components it is to be appreciated that alternatively an air-bag for an embodiment of the invention may be made using a one-piece weaving process.

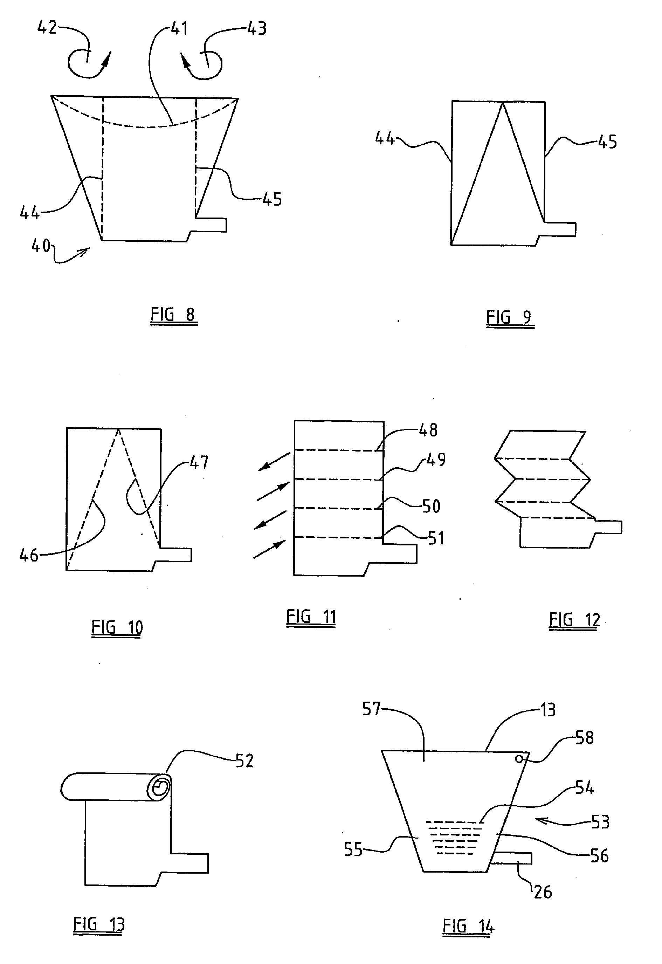

Figure 7 illustrates an air-bag 31 formed using a one-piece weaving process. The air-bag presents a frusto-conical upper portion 32 having an oval upper face 33. A relatively thin neck 34 is provided at the lower end of the frusto-conical upper portion 32 and a further integral lower frusto-conical portion 35 is provided beneath the neck. A gas flow duct 36 extends outwardly from the lower frusto-conical portion 35 and a seam, possibly formed by a line of stitching along line 37 which extends across the lower frusto-conical region 35 can then be provided by manipulating the air-bag 31 in a similar way as described above with reference to Figure 4. Thus, the lower frusto-conical portion 32 is turned inwardly and pulled through the upper portion 32 to facilitate creation of the line of stitching 37. The line of stitching 37 is thus equivalent to the line of stitching 25 described above. Just above the gas flow duct 36, in the upper frusto-conical region 32, an aperture 38 is provided dimensioned to accommodate the gas flow duct 36. It is to be appreciated, therefore, that the one-piece woven bag shown in Figure 7 is (especially when laid out flat so that opposed parts of the air-bag form super-imposed layers) effectively equivalent to the stitched bag shown in Figure 4.

An air-bag forming an embodiment of the invention may be folded so as to be accommodated conveniently in a package, such as the package 6. As an initial step the air-bag, shown as air-bag 40 in Figure 8, will be laid out flat. The main inflatable region of the air-bag, as formed by panels 14 has diverging sides. The uppermost part of the air-bag, as constituted by the component 12 of Figure 3, or as constituted by the oval upper face 33 of the air-bag shown in Figure 7, will be tucked downwardly into the interior of the air-bag, as indicated by the dotted line 41. Subsequently the diverging sides of the air-bag will be folded inwardly as indicated by arrows 42, 43. Thus, the part of the air-bag lying to the left of a notional fold-line 44 will initially be folded inwardly and subsequently part of the air-bag lying to the right of a notional fold-line 45 will be folded inwardly. The fold lines 44 and 45 are parallel. The air-bag will then have a substantially rectangular configuration as shown in Figure 9.

In an alternative method of folding the air-bag, instead of folding parts of the air-bag about notional fold-lines, the side parts of the air-bag may be tucked back into the interior of the air-bag, to provide an air-bag, as shown in Figure 10, which has a configuration very similar to that of the air-bag as shown in Figure 9, but without the presence of external folded flaps, the folded flaps being replaced by internal tucks 46, 47.

An air-bag having the configuration as shown Figure 9 or Figure 10 may be zig-zag folded as shown in Figures 11 and 12. If the air-bag is to be zig-zag folded, the rectangular region will be folded about spaced apart horizontal fold-lines 48, 49, 50, 51, so as to provide a "concertina" or "bellows" fold, as shown in Figure 12. Alternatively the upper part of the air-bag may simply be rolled to form a roll 52 as shown in Figure 13.

The air-bag, when folded or rolled, may be wrapped or packaged to form a package 6 as shown in Figure 1 and 2.

Figure 14 illustrates a modified embodiment of the invention. In this embodiment the internal gas deflector, which is shown in Figure 5 is omitted for the sake of clarity of illustration. The modified embodiment will be described as if made from three components 10, 11, 12, but an embodiment can readily be made using a one-piece weaving technique.

In the air-bag 53 of Figure 14 part of the upper panel 14 of the component 10 is secured to part of the upper panel 14 of the component 11 by means of a releasable connection 54 which may be a tear seam or a glue, especially a glue which is of the type which melts or yields when subjected to heat. The releasable connection 54 occupies a central region of the super-imposed panels 14 but does not extend into a first region 55 which extends parallel with the edge of the super-imposed upper panels 14 remote from the gas flow duct 26 and a corresponding region 56 which extends parallel with the side edges of the super-imposed panels 14 at the position immediately above the gas duct 26. The regions lead to a zone 57, adjacent the upper edges 13 of the panels 14, above the releasable connection 54. A vent hole 58 is provided.

It is envisaged that when an air-bag of the type shown in Figure 14 is inflated, gas from the appropriate gas generator will be deflected by the internal deflector constituted by the super-imposed panels 16 and the associated line of stitching 25. The gas will flow through the regions 55, 56 which lie adjacent opposed side edges of the air-bag, and these regions will become inflated cells which are relatively rigid. The presence of these rigid cells, which diverge from each other, and which lead to a main inflatable part of the air-bag within the zone 57 which is bounded by the upper edges 13 of the super-imposed panels, will add to the stability of the air-bag as the air-bag inflates.

The fact that the releasable connection 54 is present will serve to minimise the internal volume of the air-bag, meaning that the air-bag will reach a fully inflated state in a relatively short period of time. The air-bag will, on initial inflation, have an uninflated zone in the region of the releasable connection 54. This may permit a forward movement of the torso which is greater than might otherwise be the case, thus enabling the torso to be decelerated by the seat belt system, without striking the bag, thereby reducing the deflection of the chest of the seat occupant and consequently minimising the risk of injury occurring.

The releasable connection 54 will, it is envisaged, eventually become released either as a consequence of pressure within the bag reaching a predetermined threshold and tearing the tear-seam or breaking the adhesive, as a consequence of hot gas acting on the adhesive and permitting the adhesive to become released. This will serve to increase the available volume within the bag, thus enabling an undesirably high pressure within the bag to reduce, and providing the bag with an appropriate deployment characteristic.

The releasable means may thus be considered to be equivalent to an internal venting means, but it is to be understood that the bag may be provided with conventional venting means in the form of an aperture or vent hole, such as vent 58 provided in the air-bag at a convenient position. The vent hole may initially be sealed by means of a tear-seam.

In the present Specification "comprises" means "includes or consists of" and "comprising" means "including or consisting of".

## Claims

1. An air-bag, the air-bag defining a first main inflatable region (14) and defining an integral second region (16), the second region (16) having a gas flow duct (26), **characterised in that** the second region (16) is tucked into the first region (14), with the gas flow duct emerging from the first region (14) through an aperture or opening (23) being provided in the first region (14).

2. An air-bag according to Claim 1 wherein the first region (14) is of frusto-conical form and the second region (16) is of frusto-conical form, the first region (14) and the second region (10) meeting at a relatively thin neck (15).

3. An air-bag according to Claim 1 or 2 wherein the end of the second region (16) remote from the first region (14) is open.

4. An air-bag according to any one of the preceding Claims wherein the second region (16) is formed of two super-imposed layers, the layers being interconnected by a seam (25) to define a gas deflector.

5. An air-bag according to any one of the preceding Claims formed from two identical super-imposed layers of fabric (10, 11) and a third component of fabric (12), the components being interconnected by stitching.

6. An air-bag according to any one of claims 1 to 4 formed from two identical super-imposed layers of fabric interconnected by stitching.

7. An air-bag according to any one of Claims 1 to 4 wherein the air-bag is a one-piece woven air-bag (31).

8. An air-bag according to any one of the preceding Claims wherein the first region (14) of the air-bag is formed from two layers provided with a releasable connection (54) interconnecting parts of the layers.

9. An air-bag according to Claim 8 wherein the releasable interconnection (54) is a tear seam.

10. An air-bag according to Claim 8 wherein the releasable interconnection (54) is an adhesive connection.

11. An air-bag according to Claim 10 wherein the adhesive connection is of an adhesive which yields when subjected to heat.

12. An air-bag according to any one of Claims 8 to 11 wherein the releasable connection (54) serves to define two spaced apart inflatable ducts inflatable to form substantially rigid cells.

13. An air-bag according to any preceding claim wherein the air-bag is provided with an additional aperture (38) to act as a vent,

14. An air-bag according to any one of the preceding claims wherein the air-bag is mounted to a safety belt.

15. A method of assembling an air-bag, the air-bag having a first main inflatable region (14) and an integral second region (16) to form a gas deflector, the second region being provided with a protruding gas flow duct (26), the main inflatable region (14) being provided with an aperture or opening (18), **characterised in that** the method comprises tucking the second region into the main region and causing the gas flow duct to project outwardly through the aperture or opening (23).

16. A method according to Claim 15 wherein the method comprises a preliminary step of tucking the gas flow duct (26) into the said second region (16).

17. A method according to any one of Claims 15 to 16 wherein the main inflatable region (14) when laid flat has opposed diverging sides, the method including a subsequent step of folding or tucking the air-bag to have a substantially rectangular form.

18. A method according to Claim 17 wherein parts of the air-bag are folded inwardly about substantially parallel fold-lines (48, 49, 50, 51) so that the air-bag has the substantially rectangular form.

19. A method according to Claim 17 wherein parts of the air-bag are tucked inwardly into the interior of the air-bag so that the air-bag has the substantially rectangular form.

20. A method according to any one Claims 17 to 19 wherein the air-bag, when having a rectangular form, is zig-zag folded.

21. A method according to any one of Claims 17 to 19 wherein the air-bag, when having a rectangular form is rolled.

## Patentansprüche

1. Airbag mit einem ersten aufblasbaren Hauptbereich (14) und mit einem integralen zweiten Bereich (16), wobei der zweite Bereich (16) eine Gasführungsleitung (26) aufweist, **dadurch gekennzeichnet, daß** der zweite Bereich (16) in den ersten Bereich (14) eingesteckt ist, wobei die Gasführungsleitung aus dem ersten Bereich (14) durch eine in dem ersten Bereich (14) ausgebildete Öffnung oder Loch (23) hervortritt.

2. Airbag nach Anspruch 1, bei welchem der erste Bereich (14) eine kegelstumpfförmige Gestalt und der zweite Bereich (16) eine kegelstumpfförmige Gestalt aufweisen, wobei sich der erste Bereich (14) und der zweite Bereich (10) an einem relativ dünnen Hals (15) treffen.

3. Airbag nach Anspruch 1 oder 2, bei welchem das dem ersten Bereich (14) abgewandte Ende des zweiten Bereichs (16) offen ist.

4. Airbag nach einem der vorhergehenden Ansprüche, bei welchem der zweite Bereich (16) durch zwei aufeinandergelegte Lagen gebildet ist, die mittels einer Naht (25) zur Bildung eines Gasdeflektors miteinander verbunden sind.

5. Airbag nach einem der vorhergehenden Ansprüche, der durch zwei identische aufeinander gelegte Gewebelagen (10, 11) sowie durch einen dritten Gewebebestandteil (12) gebildet ist, wobei die Bestandteile miteinander durch Nähen verbunden sind.

6. Airbag nach einem der Ansprüche 1 bis 4, der aus zwei identischen aufeinander gelegten Gewebelagen besteht, die durch Nähen miteinander verbünden sind.

7. Airbag nach einem der Ansprüche 1 bis 4, bei welchem der Airbag ein einstückig durchgewebter Airbag (31) ist.

8. Airbag nach einem der vorhergehenden Ansprüche, bei welchem der erste Bereich (14) des Airbags durch zwei Lagen gebildet ist, die mit einer lösbaren Verbindung (54) versehen sind, die Bereiche der Lagen miteinander verbinden.

9. Airbag nach Anspruch 8, bei welchem die lösbare Verbindung (54) eine Reißnabt ist.

10. Airbag nach Anspruch 8, bei welchem die lösbare Verbindung (54) eine Adhäsiv-Verbindung ist.

11. Airbag nach Anspruch 10, bei welchem die Adhäsiv-Verbindung aus einem bei Hitzeeinwirkung nachgebenden Adhäsiv besteht.

12. Airbag nach einem der Ansprüche 8 bis 11, bei welchem die lösbare Verbindung (54) dazu dient, zwei voneinander beabstandete aufblasbare Leitungen zu definieren, die aufblasbar sind, um im wesentlichen steife Zellen auszubilden.

13. Airbag nach einem der vorhergehenden Ansprüche, bei welchem der Airbag mit einer zusätzlichen Öffnung (38) als Abblasöffnung versehen ist.

14. Airbag nach einem der vorhergehenden Ansprüche, bei welchem der Airbag an einem Sicherheitsgurt angebracht ist.

15. Verfahren zur Herstellung eines Airbags, wobei der Airbag einen ersten Hauptbereich (14) und einen integralen zweiten Bereich (16) zur Ausbildung eines Gasdeflektors aufweist, wobei der zweite Bereich mit einer hervorstehenden Gasführungsleitung (26) versehen und der aufblasbare Hauptbereich (14) mit einer Öffnung oder einem Loch (18) versehen ist, **dadurch gekennzeichnet, daß** das Verfahren das Einstecken des zweiten Bereichs in den Hauptbereich und das Veranlassen eines Hervorstehen der Gasführungsleitung nach Außen durch die Öffnung oder das Loch (23) umfasst.

16. Verfahren nach Anspruch 15, bei welchem das Verfahren einen vorläufigen Schritt des Einsteckens der Gasführungsleitung (26) in den zweiten Bereich (16) umfasst.

17. Verfahren nach einem der Ansprüche 15 oder 16, bei welchem der aufblasbare Hauptbereich (14) bei Ausbreitung einander gegenüber liegende, auseinanderstrebende Seiten aufweist, wobei das Verfahren einen nachfolgenden Schritt des Faltens oder Einsteckens des Airbags zur Herstellung einer im Wesentlichen rechteckigen Form aufweist.

18. Verfahren nach Anspruch 17, bei welchem Teile des Airbags einwärts um im wesentlichen parallele Faltlinien (48, 49, 50, 51) gefaltet werden, so daß der Airbag eine im Wesentlichen rechteckige Form aufweist.

19. Verfahren nach Anspruch 17, bei welchem Teile des Airbags nach Innen in das Innere des Airbags eingesteckt werden, so daß der Airbag eine im Wesentlichen rechteckige Form aufweist.

20. Verfahren nach einem der Ansprüche 17 bis 19, bei welchem der in der rechteckigen Form vorliegende Airbag zick-zack gefaltet wird.

21. Verfahren nach einem der Ansprüche 17 bis 19, bei welchem der in rechteckiger Form vorliegende Airbag gerollt wird.

## Revendications

1. Airbag, l'airbag définissant une première région gonflable principale (14) et définissant une seconde région intégrée (16), la seconde région (16) ayant un conduit d'écoulement de gaz (26), **caractérisé en ce que** la seconde région (16) est repliée dans la première région (14), le conduit d'écoulement de gaz émergeant de la première région (14), à travers une ouverture ou un orifice (23) prévu dans la première région (14).

2. Airbag selon la revendication 1, dans lequel la première région (14) a une forme tronconique et la seconde région (16) a une forme tronconique, la première région (14) et la seconde région (10) se rencontrant au niveau d'un col relativement fin (15).

3. Airbag selon la revendication 1 ou 2, dans lequel l'extrémité de la seconde région (16) à distance de la première région (14) est ouverte.

4. Airbag selon l'une quelconque des revendications précédentes, dans lequel la seconde région (16) est formée de deux couches superposées, les couches étant assemblées par une couture (25) pour définir un déflecteur de gaz.

5. Airbag selon l'une quelconque des revendications précédentes formé à partir de deux couches superposées identiques de tissu (10, 11) et d'un troisième composant de tissu (12), les composants étant assemblés par couture.

6. Airbag selon l'une quelconque des revendications 1 à 4 formé à partir de deux couches superposées identiques de tissu assemblées par couture.

7. Airbag selon l'une quelconque des revendications 1 à 4, dans lequel l'airbag est un airbag tissé d'une seule pièce (31).

8. Airbag selon l'une quelconque des revendications précédentes, dans lequel la première région (14) de l'airbag est formée de deux couches dotées d'une liaison amovible (54) assemblant les parties des couches.

9. Airbag selon la revendication 8, dans lequel l'assemblage amovible (54) est une couture déchirable.

10. Airbag selon la revendication 8, dans lequel l'assemblage amovible (54) est une liaison adhésive.

11. Airbag selon la revendication 10, dans lequel la liaison adhésive est constituée d'un adhésif qui est actif lorsqu'il est soumis à la chaleur.

12. Airbag selon l'une quelconque des revendications 8 à 11, dans lequel la liaison amovible (54) sert à définir deux conduits gonflables espacés gonflables pour former des cellules sensiblement rigides.

13. Airbag selon l'une quelconque des revendications précédentes, dans lequel l'airbag est doté d'une ouverture supplémentaire (38) destinée à servir d'évent.

14. Airbag selon l'une quelconque des revendications précédentes, dans lequel l'airbag est monté sur une ceinture de sécurité.

15. Procédé d'assemblage d'un airbag, l'airbag ayant une première région gonflable principale (14) et une seconde région intégrée (16) pour former un déflecteur de gaz, la seconde région étant dotée d'un conduit d'écoulement de gaz en saillie (26), la région gonflable principale (14) étant dotée d'une ouverture ou d'un orifice (18), **caractérisé en ce que** le procédé consiste à replier la seconde région dans la région principale et faire sortir le conduit d'écoulement de gaz vers l'extérieur à travers l'ouverture ou l'orifice (23).

16. Procédé selon la revendication 15, dans lequel le procédé comprend une étape préliminaire consistant à replier le conduit d'écoulement de gaz (26) dans ladite seconde région (16).

17. Procédé selon l'une quelconque des revendications 15 à 16, dans lequel la région gonflable principale (14) lorsqu'elle est disposée à plat présente deux côtés divergents opposés, le procédé comprenant une étape consécutive de pliage ou repliage de l'airbag de sorte qu'il ait une forme sensiblement rectangulaire.

18. Procédé selon la revendication 17, dans lequel les parties de l'airbag sont pliées vers l'intérieur sur des lignes de pliage sensiblement parallèles (48, 49, 50, 51) de sorte que l'airbag ait la forme sensiblement rectangulaire.

19. Procédé selon la revendication 17, dans lequel les parties de l'airbag sont repliées vers l'intérieur à l'intérieur de l'airbag de sorte que l'airbag ait la forme sensiblement rectangulaire.

20. Procédé selon l'une quelconque des revendications 17 à 19, dans lequel l'airbag, lorsqu'il a une forme rectangulaire, est plié en zigzag.

21. Procédé selon l'une quelconque des revendications 17 à 19, dans lequel l'airbag, lorsqu'il a une forme rectangulaire, est enroulé.
